# EUROPEAN PATENT SPECIFICATION

(11) **EP 1 141 928 B1**
(45) Date of publication and mention of the grant of the patent: **12.02.2003**
(21) Application number: 99956366.1
(22) Date of filing: 05.11.1999
(51) Int. Cl.: G09B 23/00, G09B 23/26

(54) **SIMULATION OF CHEMICAL INTERACTIONS**
SIMULATION CHEMISCHER WECHSELWIRKUNGEN
SIMULATION D'INTERACTIONS CHIMIQUES

(30) Priority: 11.11.1998 NO 985267
(43) Date of publication of application: 10.10.2001
(73) Proprietor: Breivik, Jarle, 0488 Oslo (NO)
(72) Inventor: Breivik, Jarle, 0488 Oslo (NO)
(74) Representative: Baverstock, Michael George Douglas
(86) International application number: NO9900335
(87) International publication number: WO00028506

(56) References cited:
- DE-A1- 3 502 968
- US-A- 4 846 988
- DATBASE WPI Week 8245, Derwent Publications Ltd., Londen GB; Class P85, AN 1982-P3816E, XP002900904 & SU,A,896675, (AS UKR PHYS MECH IN), 07 January 1982,
- American Scientist, Volume 47, 1959, HAROLD J. MOROWITZ, "A model of reproduction" page 261 - page 263, XP002900905

## Description

The present invention relates to a system of elements floating in a liquid, with structural and magnetic characteristics making them bind to each other according to certain rules in response to changes in temperature and use of the system to simulate chemical interactions and catalysis.

Chemical reactions may be viewed as the creation and breaking of bindings between individual elements. Accordingly, catalytic function may by regarded as an element's ability to promote the creation and breaking of bindings between elements.

Biological systems represent complex networks of biochemical elements with interrelated catalytic functions. These elements and their catalytic functions may be directly traced to the DNA molecule and its unique ability to store and replicate molecular information.

DNA is a linear polymer of deoxyribonucleotides. Each deoxyribonucleotide consists of three main groups, 1) a deoxyribose-a pentose sugar, 2) a phosphate group and 3) one of the heterocyclic nitrogenous bases, adenine (A), thymine (T), guanine (G) or cytosine (C)

A double helical DNA molecule consists of two complimentary, antiparallel strands of DNA. The phosphodiester bonds linking the 5' and 3' carbons of the adjacent sugar residues results in directionality of the polynucleotide chain. In the double stranded DNA molecule, the phosphodiester bonds of each polynucleotide chain run in opposite directions (i.e., 5'-3' and 3'-5') and are thus said to be antiparallel. Base pairing between strands is the result of hydrogen bonding between adjacent base pairs. Normally, A residues form 2 hydrogen bonds with T, and G residues form 3 hydrogen bonds with C resulting in complementary base pairing between the DNA strands. Therefore the sequence of bases in one strand determines the sequence of the complementary strand and is the basis of DNA replication. The two strands of DNA coil around a central axis in a right handed manner with the sugar-phosphate backbone on the exterior and the bases on the interior. The aromatic rings of the bases are stacked in the middle, perpendicular to the axis of the DNA double helix. A full rotation in the helical structure comprises ten nucleotides.

The nucleotides in a DNA strand are held together by strong covalent bonds between the phosphate and the sugar residues. The creation and breaking of these bonds requires supply of energy and in present organisms these reactions are catalyzed by energy consuming enzymatic reactions. The bonds between the complementary bases are weak hydrogen bonds and the attractive forces between to single nucleotides are weak. When the nucleotides are organized in DNA strands, large numbers of hydrogen bonds are coordinated, so that the attractive forces between two complementary strands become relatively strong. They are however responsive to heat (below 100°C) and alkali, and are considerably weaker than the covalent bonds composing the individual DNA strands.

All biological systems are based on the ability of the DNA molecule to store and reproduce information. The genetic information is stored in the structure of the DNA molecule as different sequences of nucleotides. Reproducing this information is achieved in that an existing nucleotide chain, via an intricate network of biochemical reactions, catalyzes the creation of a complementary chain.

It is today widely accepted that life on earth evolved from simple molecular structures by means of natural selection. This evolution process, which was first recognized by Charles R. Darwin, explains biological evolution in terms of a simple mechanism directly related to self-replication of biological information.

Human civilization is at present experiencing the early signs of a fast approaching revolution driven by incredible advances in biotechnology. Cloning of mammals is today a reality and genetic manipulation is performed as routine assays in laboratories all over the world. These advances constitute complex challenges to different parts of society, including political as well as private decision making. Consequently, there is a growing need for easily accessible information related to the fundamental aspects of biology. This need can be meet by a system, which in simple manner simulates the fundamental chemical mechanisms underlying all biological systems.

Different systems have been proposed to simulate chemical interactions. In American Scientist, Vol. 47; 261-263, 1959 (H.J. Morowitz) it is suggested a system for simulating replication based on two types of element A and B, floating in water. A and B can bind to each other, but only if the binding is initiated by an existing complex of A and B. Thus an AB unit can catalyze creation of a new AB unit. Each element carries a battery and an electromagnet. The bindings between A and B elements are, however, not reversible, and the system does not involve the use of natural magnets and ferromagnetism, nor are the inter-elemental bindings controlled or responsive to changes in temperature.

There are a number of known systems for demonstrating molecule structures such as proteins, DNA, or RNA wherein the elements are held together by magnetic forces, glue etc. (DE 23 41 320 A1, SE 15 58 07, US 3,594,924). These systems are, however, all static models, which in no way simulate reversible chemical interactions or catalysis.

In SU 89 66 75 B it is described magnetic elements simulating items «for demonstration in investigating physico-mechanical properties of solids». The magnetic elements are enclosed in an elastic shell and floating in a tank filled with a liquid. The repulsion forces between items can be simulated in addition to elastic properties of solids. This system does not involve reversible chemical interactions simulating catalytic functions, nor the use of temperature as a means for regulating the magnetic forces and the inter-elemental bindings.

Thus there is an object to provide a system for demonstration/simulation of reversible chemical reactions and catalytic function based on temperature dependent ferromagnetic interactions.

These objects are obtained by the present invention characterized by the enclosed claims.

The present invention provides a system of elements floating in a liquid, which can bind together by temperature dependent ferromagnetic binding forces, wherein the elements are physically designed to provide certain characteristics to the inter-elemental bindings, and that the magnetic forces are controlled by temperature. The invention further comprises use of the system to simulate chemical interactions, and catalysis, wherein the bindings are manipulated by varying temperature and turbulence, and by introducing modifying elements, and use of the system as an educational tool, an interactive game, a decoration and a tool for scientific purposes.

In the following the invention will be described in greater detail by referring to the figures, wherein;
- Fig. 1: illustrates the architecture of the DNA molecule. Panel 1, describes the four nitrogenous bases, adenine (A), thymine (T), guanine (G) and cytosine (C), and their respective paring A-T and G-C; panel 2, describes a nucleotide comprising a base (a), a phosphate group (c) and a ribose (b); while panel 3 demonstrates how the DNA helix is composed of complementary and antiparallel chains of nucleotides, and also illustrates how the two strands split apart and give rise to two new copies of the double-stranded DNA molecule.

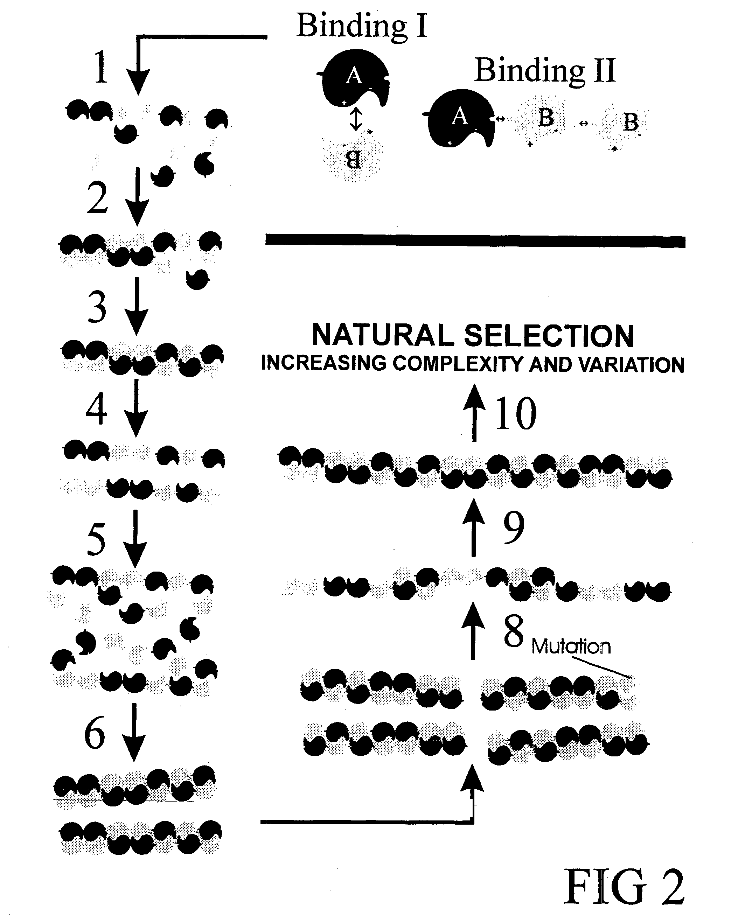

- Fig. 2: illustrates schematically how a combination of two inter-elemental bindings (Binding I and II) constitutes the basis of self-replication and an evolutionary process. The two elements A and B bind each other through forces receptive to cyclic temperature changes, so that the binding is created at low and broken at high temperatures (Binding I). The elements connect to form chains when oriented in a favorable geometrical position, by a binding mechanism less influenced by temperature (Binding II). A random chain of elements is created spontaneously (1), at lower temperatures the free floating elements arrange themselves along the existing chain (2), the units are bound together to form a complementary chain and a double chain is created (3), the temperature is increased and the chains depart (4), the temperature drops again and free floating elements arrange themselves along the two chains (5), two double chains are created (6), leading to that the number of chains will increase exponentially (7). New sequences occurs due to miss-incorporations (point-mutation) (7), or as a consequence of rearrangements due to double hybridizing (8) thus resulting in longer chains (9). Chains which in a given environment are more often reproduced will increase in number at the expense of other chains, and thus be selected by means of natural selection (10). This will drive the process towards chains with increasing complexity and better ability to self-replicate.
- Fig. 3: illustrates the single element in the system seen from all angels, describes the design of the element.
- Fig. 4: illustrates one of the possible bindings, Binding I. This binding is specific for the hydrogen bindings between complementary units (G-C, A-T) representing the respective nucleotides.
- Fig. 5: illustrates the second of the possible bindings, Binding II. This binding represents the ribose-phosphate binding in the DNA molecule, which produce the nucleotide chains.
- Fig. 6: illustrates that Binding I and II may be connected so that, the magnetic force in Binding I is enhanced for elements already connected by Binding II, causing that chains of the elements have greater attractive forces than free-floating elements. This will discourage mutual blocking between individual complementary elements.
- Fig. 7: illustrates the facilitation of the creation of a chain when the temperature in the liquid medium is reduced and a chain is already existing.
- Fig. 8: illustrates the creation of a double chained helix, due to the angle 9 (Fig. I ) on the element.
- Fig. 9: illustrates separation of the two chains when the temperature of the liquid medium is increased above the T_{c} for Binding I.
- Fig. 10: illustrates the system used to simulate a mutation wherein a different element M is designed, which is able to bind both C and T elements.
- Fig. 11: illustrates a total assembly comprising a transparent water tank with a base containing electronically operated thermostats and turbulence generator, connected to a computer for operating and monitoring the temperature and turbulence in the liquid medium.

The most intriguing of all catalytic processes is the self-replicating and adapting process generally recognized as «life». Life on earth has evolved by means of natural selection and it is this fundamental mechanism which underlies the adaptability of biological systems. This adaptability as well as the process of self-replication can be directly traced to the structure and function of the DNA molecule. In present organisms an intricate network of interrelated biochemical reactions orchestrates self-replication of the DNA molecule. In fact one of the most powerful scientific models of biology is to view the complete organism as a vehicle set up by DNA to transfer the molecular information to the next generation of organisms. It is also widely accepted that life on earth has evolved though an early stage where simple molecular structures, probably related to the RNA molecule, replicated without the complex biochemistry of present organisms. This hypothesis is based on the fact that the RNA molecule combines the ability of replication with powerful catalytic functions. However, although the principle of self-replication and adaptability may be deduced from the structure of the DNA molecule, it has proven extremely difficult to construct artificial molecular systems which combines these two hallmarks of life, thus facilitating evolution by means of natural selection. It was thus a great surprise to the inventor when he after considerable trial and error, realized that such a system could be constructed, not from chemistry, but from carefully designed solid-phase elements, floating freely in a liquid.

The following criteria must be met for a system to simulate an evolutionary process.
1. Reproduction: The element carrying the information must increase the probability for its own reproduction in its own environment.
2. Mutagenesis: The reproduction process must include a certain error tendency to create a repertoire of variants, which can be selected by the environment, a process referred to as natural selection.
3. Death: The system must involve recycling of the information carrying elements, such that the process is open-ended.

In order to provide such characteristics to a system based on free-floating physical elements, each element must comprise the ability to reversibly bind to each other, according to a set of roles, and in response to specific changes in the environment.

The inventor tried different alternatives for constructing such binding mechanisms, and came up with a number of possible solutions, including a combination of different systems comprising mechanical locking and mucous glues with temperature dependent adherence. Solutions comprising magnetic bindings provided however a unique way of binding since magnetic forces work across distances and involve specificity related to the positive and negative poles. In fact the previously described system by Morowitz describes how a system of elements with an intrinsic power supply and electromagnetic switches can simulate self-replication. However, this solution related to power-supplies and electromagnetism comprises costly arrangements in a system intended to involve several thousand elements. The inventor therefore continued to search for a less costly solution to the problem and contemplated the use of hard (permanent) magnetic materials. There is no obvious way by which binding between such materials are reversible, besides the fact that hard magnets become permanently inactivated when heated to extreme temperatures. The inventor found, however, that a combination of a hard and a soft (temporary) magnets constitutes a persisting reversible magnetic binding receptive to temperature changes in a range comprising the Curie point (T_{c}) of the soft magnet. This construction offers a surprisingly simple solution to the above-described problems involving materials that are commercially available and inexpensive. Furthermore, in contrast to the system by Morowitz, the bindings in the present invention are responding to changes in the environmental temperature, which in a unique manner simulates the breaking of chemical bindings in response to heat or other sources of energy. There are several soft magnets with T_{c} ranging from 10°C to 40°C, such as Fe-Ni alloys, amorphous alloys and soft ferrites, making it possible to select materials for breaking and reestablishing magnetic bindings by temperature fluctuations around room temperature.

Inexpensive, elements that demonstrate chemical interactions and catalytic functions constitutes a new and surprising invention, which can be designed to address a number of different questions related chemistry and the behavior of complex systems. However, based on the forthcoming biological revolution it seems rational to design a model of elements behaving as «ideal nucleotides», i.e. elements which interacts according to the roles of nucleotides, but without the need for a complex biochemical machinery to catalyze these interactions.

To simulate the characteristics of nucleotides and DNA/RNA molecules, a simulation of the chemical interactions between these molecules must be included. Simulation of such chemical interactions should; 1) be reversible; 2) be specific; 3) also allow some degree of unspecific binding, and; 4) the bindings must be receptive to controllable changes in the environment of the element.

According to the present invention this can be accomplished by the use of magnetic materials with different T_{c}, combined such that it is possible to create a system wherein specific bindings are broken at specific temperatures. By regulating the temperature it is possible to control the forces acting between the elements in the system. Thus this system is analogous to a chemical system wherein the weak hydrogen bindings are broken at low temperatures, while to break the covalent bindings increased energy supply is necessary.

The present invention thus relates to a system of elements floating in a liquid designed to interact due to their magnetic and mechanical characteristics to simulate reversible chemical interactions, which can be designed in a wide range of shapes and sizes.

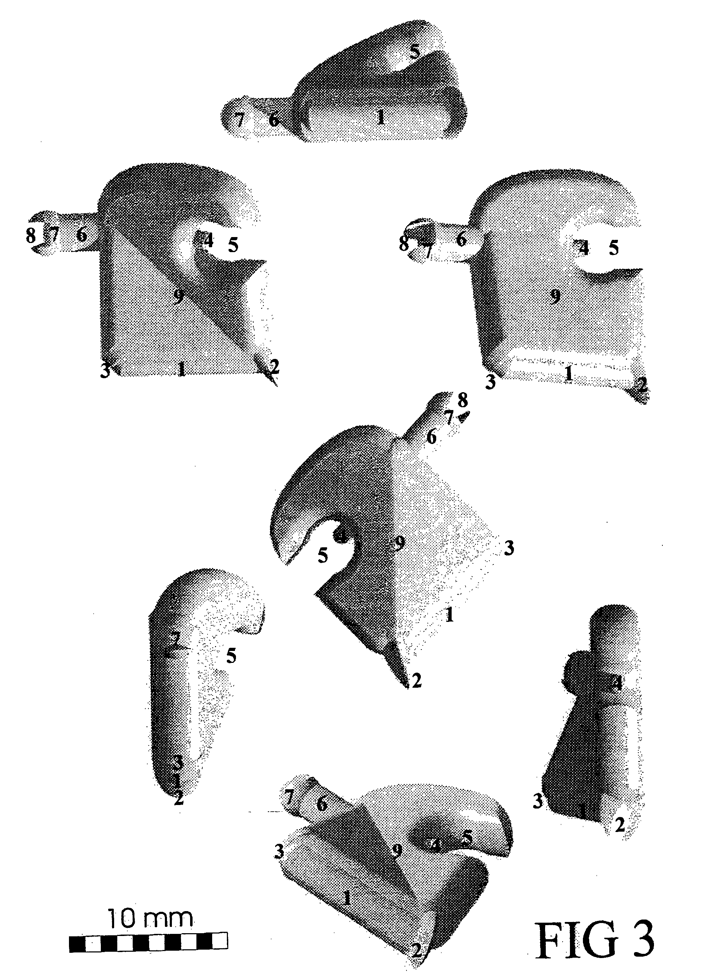

The following example relates to an application of the invention that simulates the structure, function, and molecular evolution of nucleic acids. The elements of the system are shown in Fig. 3. In one embodiment they are approximately 10 mm x 10 mm x 3 mm, made of suitable materials, such as for example plastic and with a density similar to the density of water in the temperature range from 10°C to 40°C. Each element comprises imbedded hard magnets and soft magnets in a pattern making possible bindings between only specific elements of choice.

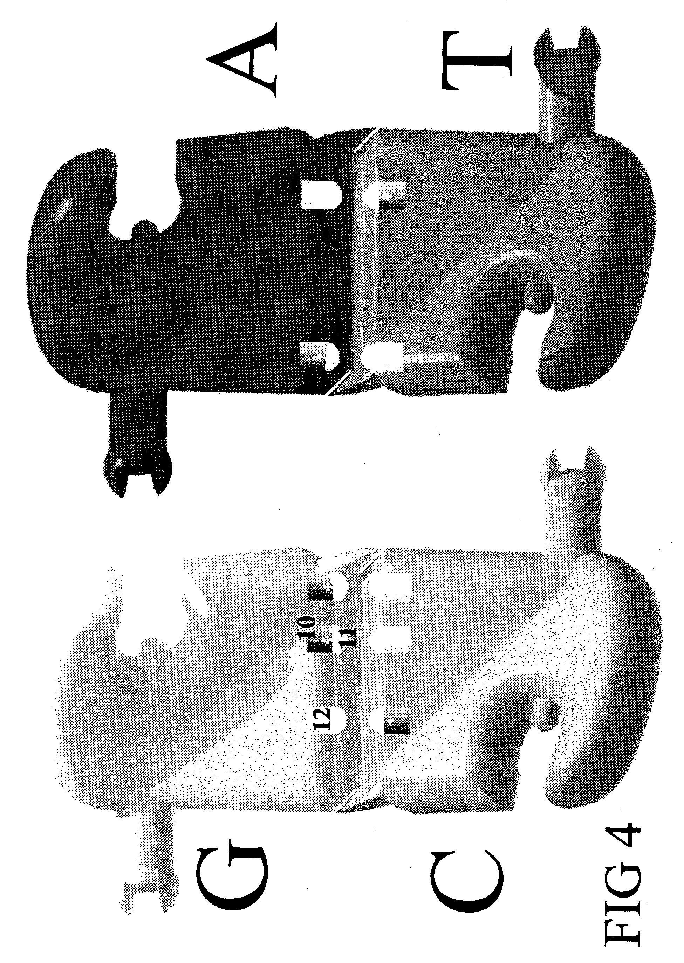

The edge 1 of the element provides the contact surface between two elements bound by Binding I, due to imbedded magnets below the surface. The semisylindrical surface of the edge 1 makes possible hinge like movement of the two elements, relative to each other. In one end of the edge 1 there is a cut-out 3, in the other end a tip 2 which fits into the cut-out 3 on the complementary element, causing Binding I to be directional, i.e. the elements bound points in opposite directions (Fig. 4). In one lateral edge, oriented in relation to the edge 1, there is a recess 5 with a peg 4 housing a soft magnet with T_{c} higher (for example 30°C) than the T_{c} of the soft magnets in the edge 1. The magnet imbedded in the peg 4 is protected by the recess 5 to assure that Binding II never/seldom shall occur spontaneously and to prevent that a binding shall result between the magnet in the peg 4 and the magnets imbedded in the edge 1. Contralaterally to the recess 5 is a projection 6 with a spherical head 7 containing a hard magnet to attract the magnet imbedded in the peg 4. The head 7 has a slit 8 in the extension of the projection 6 to shield the magnet to prevent Binding II occurring spontaneously and prevent binding between the magnet in the head 7 and the magnets in edge 1. The projection 6 fits into the recess 5 and when Binding II is activated the elements may rotate about an axis through projection 6. Binding II has to a certain degree a hinge function since the projection 6 may slightly top over in the recess without breaking the binding. Diagonally from the tip 2 to the projection 6 runs an axis 9 around which the element is angled. The two parts of the element thus describe the legs of an angle of 36°. The recess 5 and the projection 6 are thus oriented in different planes and a double chain of elements will create a helix comprising 2 x 10 units in each rotation. This angled surface of the element facilitates further that the extension of a chain preferably occurs in the end of the chain carrying a recess 5, which simulates that the DNA synthesis occurs from the 3' end.

Fig. 4 illustrates Binding I and the pattern of hard and soft magnets to make possible that only element G links to element C and element A to T. This binding simulates H-bonds in the DNA molecules, and the G-C binding comprises 3 sets of magnets while the A-T binding comprises 2 sets of magnets, corresponding to 3 H-bonds and 2 H-bonds respectively between the bases. Accordingly the G-C binding is stronger than the A-T binding which promote the different characteristics of the different sequences of elements.

The imbedded magnets (10, 11, 12) have the following characteristics:

The magnet 10 is a permanent hard magnet, made of for example neodymium, oriented with the positive pole towards the contact surface. Since all hard magnets are such oriented they are not attracted to each other and Binding I is specific for G-C and A-T elements respectively. Covering the positive pole of the magnet 10 is a hood 11 enveloping the outer end of the magnet and consisting of a soft magnetic material, made of for example a amorphous alloy, with T_{c} in the temperature range, for example approximately 25°C, in which Binding I is broken. This hood 11 mediates the magnetic forces from the hard magnet 10 to the contact surface 1 of the element (Fig. 3) only when the temperature is below T_{c}. When the temperature is above T_{c} the contact surface 1 is demagnetized. The soft magnet 12 is made of the same material as the hood 11 and has a T_{c} = 25°C. The localization is designed to interact with the magnetic forces of the hard magnet located in the opposite position in the complementary element. The demagnetization of the soft magnet 12 at temperatures above approximately 25°C promotes breaking of Binding I.

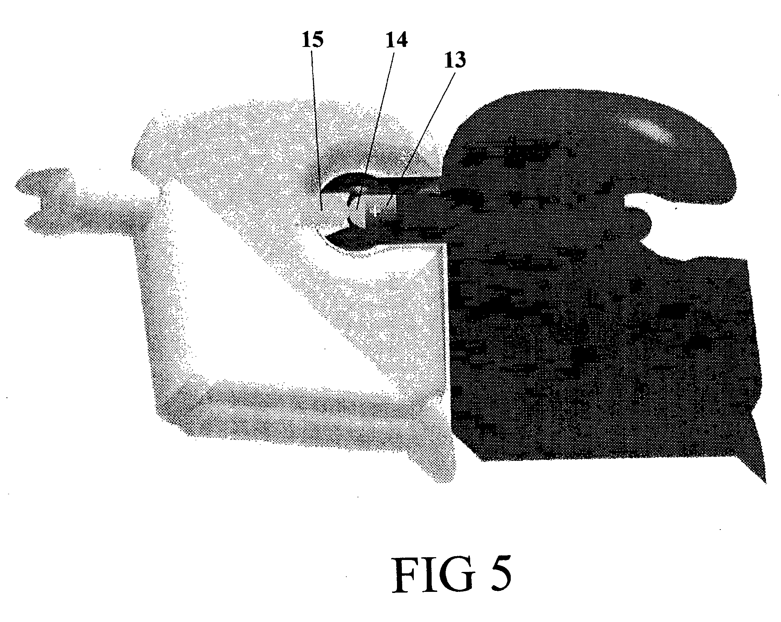

Fig. 5 illustrates Binding II, which simulates the ribose-phosphate binding in the DNA molecule producing the nucleotide chains. Binding II is maintained by the hard magnet 13, e.g. made of the same material as magnet 10, oriented with the positive pole towards the slit 8. This magnet is covered with the hood 14, made of a soft magnetic material with a T_{c} higher than for the soft magnets in Binding I, say 30°C, (Fig. 3). Magnet 13 is magnetizing the soft magnet 15 located in the peg 4 in the complementary element. The soft magnet 15 is made of similar material as the hood 14, with T_{c} = 30°C. Thus Binding II is maintained at temperatures below 30°C. The different demagnetizing temperatures for Binding I and II makes the last more resistant to higher temperatures. When the ambient temperature cycle around 25°C only Binding I will be affected. Binding II breaks only when the ambient temperature is increased above 30°C.

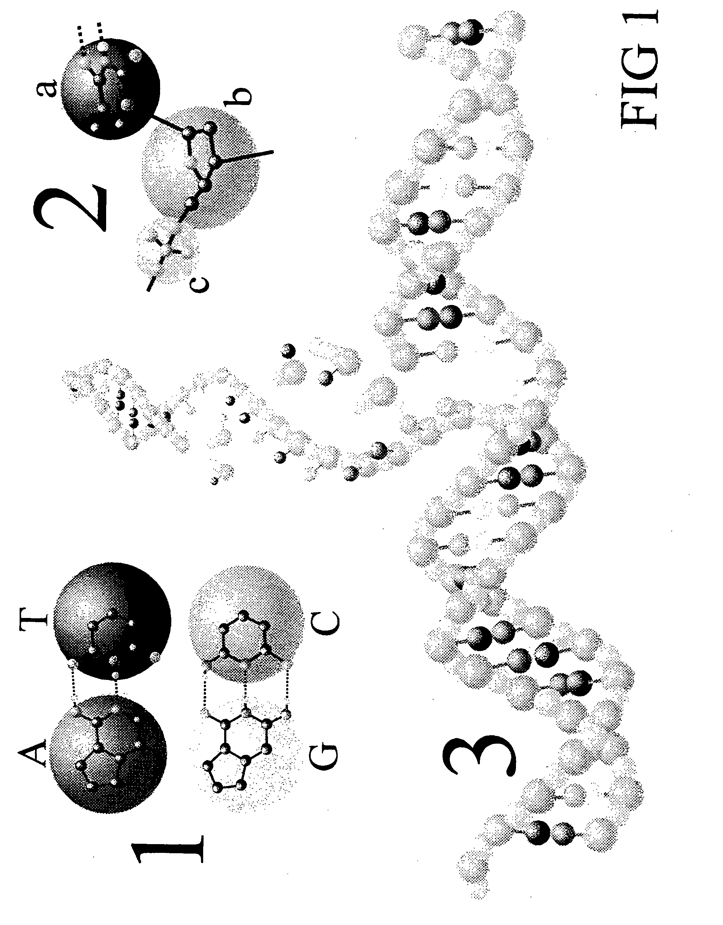

Binding II allows the elements to rotate around the projection 6 (Fig. 3). Furthermore the direction of the slit 8 makes possible movement of the bound elements in a plane through the projection 6 (Fig. 1), vertically on the figure plane (Fig. 3). The described mobility of Binding II may lead to several secondary structures which will produce different characteristics, since structure and function are interrelated.

Since Binding II is made by magnets protected by the slit 8 and the recess 5, this binding will never/seldom come into being spontaneously between free-floating elements.

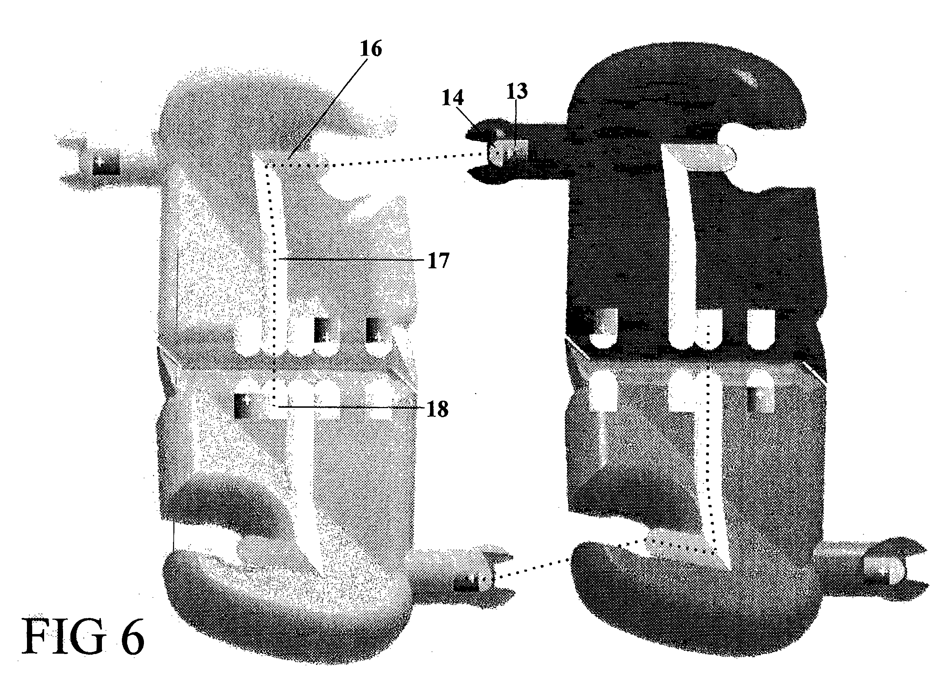

Fig. 6 describes an embodiment of the invention wherein the elements are modified such that the magnetic forces in Binding I are enhanced when Binding II is activated.

The elements of this embodiment comprise the magnets 10, 11, 12, 13 and 14 described above. In addition each element contains a bridge comprising a soft magnet 16, with T_{c} = 30°C, located inside the peg 4 and in contact with another soft magnet 17, with T_{c} = 25°C, which ends at the contact surface 1 for Binding I between the magnets 10 and 12, opposite to an additional soft magnet 18 in the complementary element.

This arrangement will make Binding I stronger when the temperature is below 25°C which is the temperature at which Binding I is broken. In this embodiment the elements already united in chains will exercise greater attractive forces than free-floating elements, and will thus reduce the trend that free-floating elements are blocking each other.

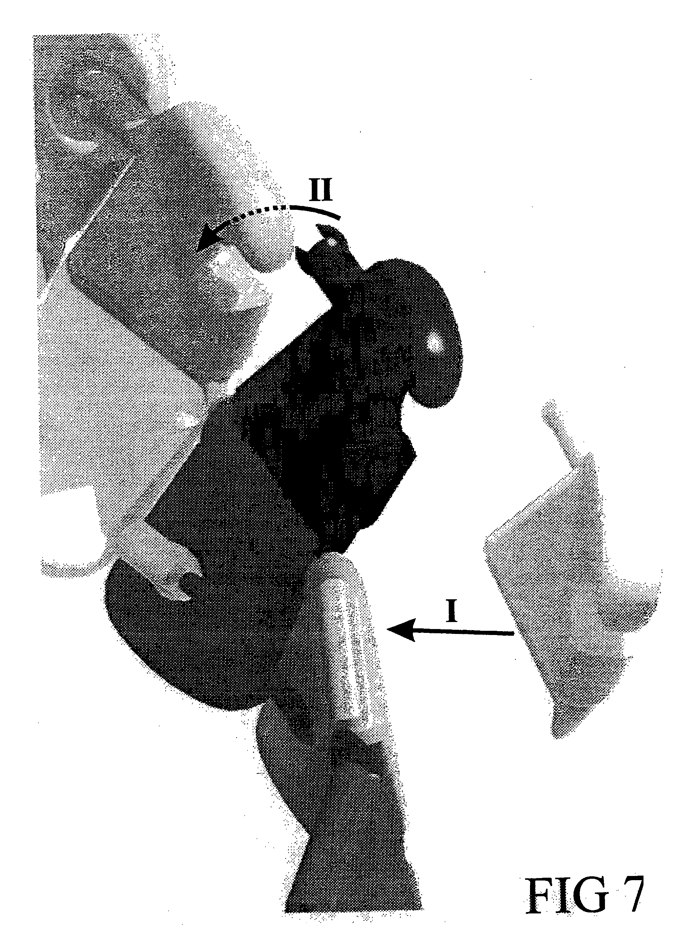

Figure 7 illustrates that an existing chain will spontaneously facilitate the creation of complementary chains when the ambient temperature cycles above and below the T_{c} for Binding I. Thus when the temperature is lowered the elements already chained together will attract free floating complementary elements and bind them via Binding I. This binding will then function as a hinge in that the newly bound elements will move back and forth around an axis through the contact surfaces 1, and cause that elements in juxtaposition will be geometrically in good position for spontaneously creation of Binding II, thus producing a new chain.

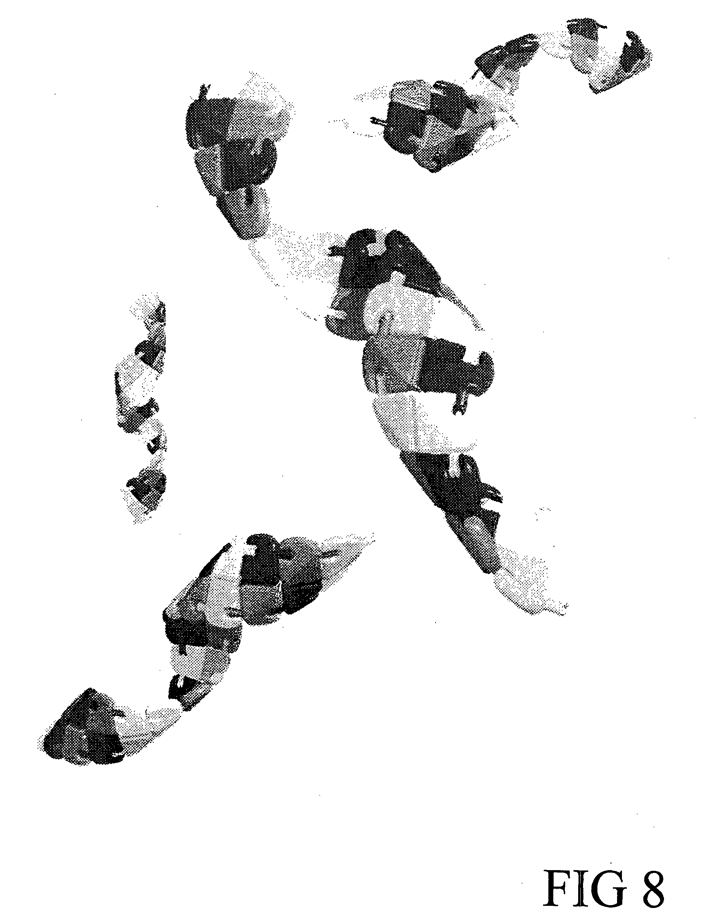

Figure 8 illustrates the creation of the helix structure of the double chain, due to the angle 9 of the surface of the element, thus simulating the DNA helix structure.

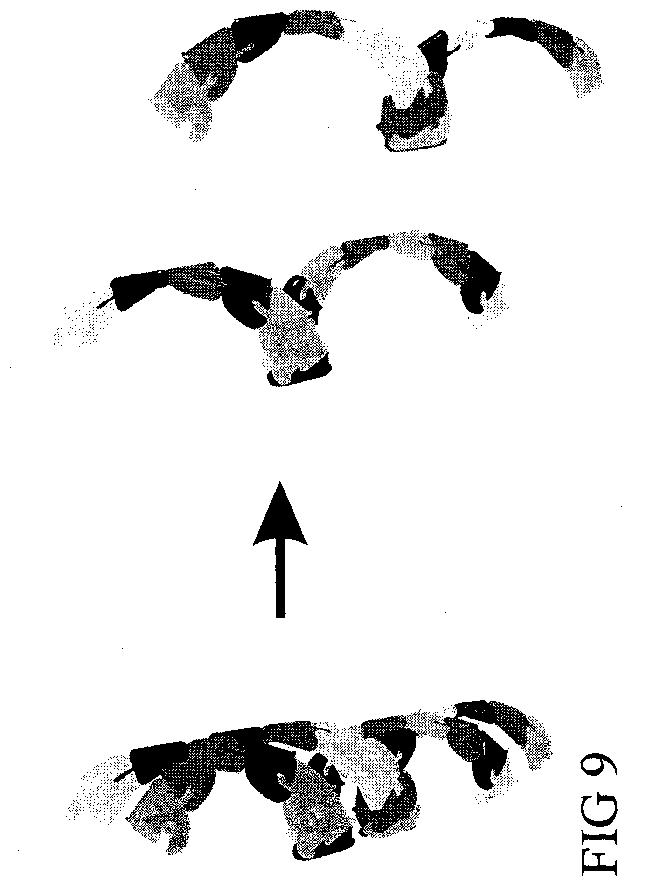

Figure 9 illustrates use of the system according to the invention to simulate denaturation of the DNA molecule by increasing the temperature. In the system according to the invention increasing the ambient temperature above the T_{c} for Binding I will break the binding, and the two chains will separate.

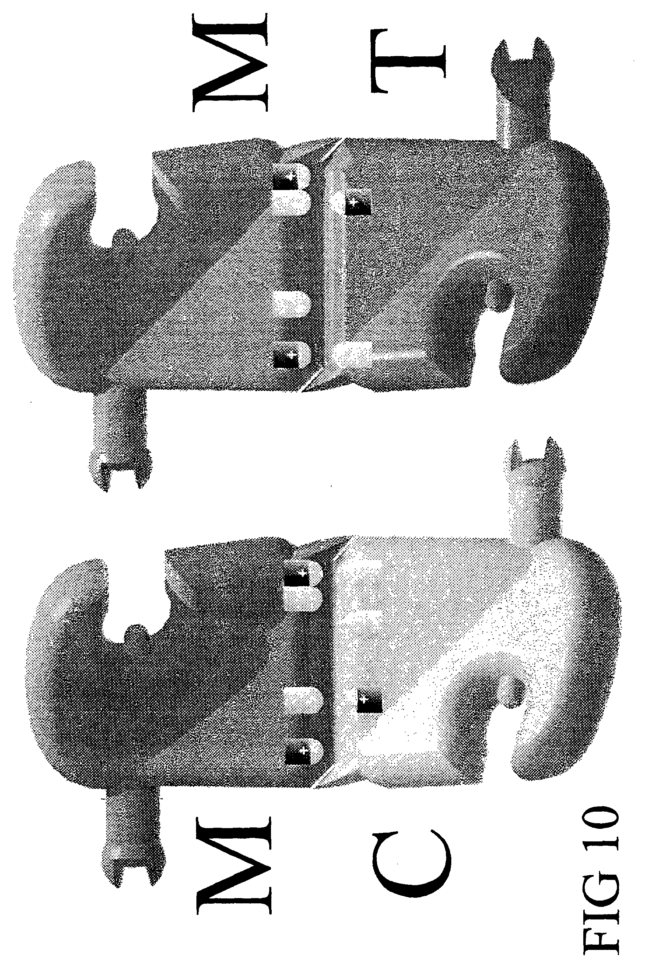

Figure 10 illustrates how the invention can simulate creation of a mutation. Mutagenes are agents inducing exchange of bases in the DNA molecule and can be for example chemicals changing the characteristics of the bases abolishing their ability to code specifically. In the system of the present invention an element M is constructed, which due to the pattern of magnets can bind (Binding I) to both the C element and T element.

Furthermore it is possible to construct mutagenic elements with a defect in the ability to create Binding II. This will result in shorter chains.

The system according to the invention can also be designed to simulate a primitive translation process wherein the genetic information in the DNA molecule is translated to chains of amino acids. In present organisms this process is performed by complex biochemical mechanisms involving cellular organelles called ribozomes. Resent findings suggest however that the evolutionary basis of this process be related to direct affinity between different amino acids and specific triplets or codons of nucleotides. The combination G-C-A in a chain of nucleic acids may e.g. attract the amino acid alanine. An exciting nucleotide chain may thus promot chains of amino acids in a similar manner as complementary strands are created.

In the present system an element Aa simulating an amino acid is designed to bind to the contact surface 1 of three specific elements of the simulated DNA chain, with which the following creating of a binding (corresponding to Binding II) for creating a chain of amino acids to simulate a peptide or protein. By varying the pattern of magnets imbedded in the contact surface 1 of the Aa elements, different amino acids, binding to different codons of elements are designed.

Still further embodiments of the invention may comprise elements simulating biological co-factors with the ability to interfere with or facilitate binding of specific elements.

In a further embodiment the magnetic forces in the elements can be produced by electromagnets powered by small photovoltaic units on each element. In this case the evolutionary process is powered by changes in the electromagnetic radiation instead of water temperature. These two mechanisms may also be combined.

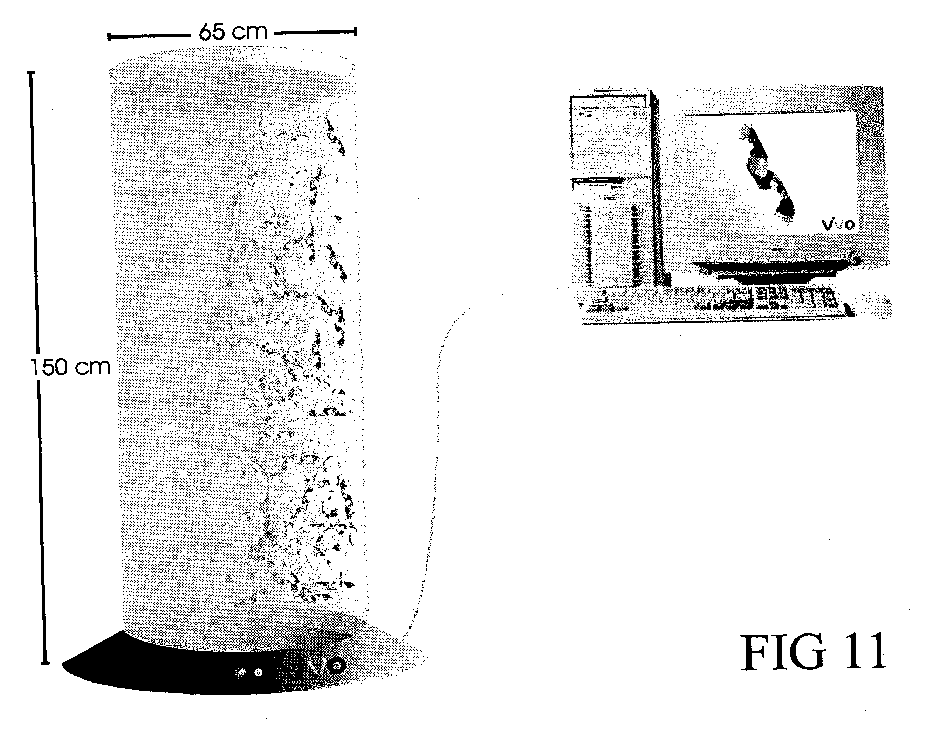

Figure 11 illustrates a container for liquid, such as water, with transparent wall for example 150 cm tall and 65 cm in diameter, containing 500 1 of liquid. The container has a base with an electronically operated thermostat and turbulence generator, connected to a programmable unit for regulation of liquid temperature and turbulence, for example a computer.

### Simulation of self-replication and mutation

1. As a start situation a large number of different elements, such as 2500 of each of the four types, are floating freely in the liquid such as water of the container (Fig. 11), and the temperature of the liquid is between T_{c} for Binding I and II, such as 28°C.
2. The first chain can be created
   a) spontaneously via Binding II, which has been designed to be a slow process due to the location of the magnets 13, 14 and 15, or
   b) by constructing a chain of elements and add this chain to the container.
3. A new chain is then created by lowering the water temperature below the T_{c} for Binding I, such as for example 20°C. Free elements will bind to complementary elements (G-C, A-T) in the template chain, and neighboring elements will be connected by Binding II as described above, simulating elongation of the chain. When the chain is elongated the total binding becomes stronger since an increasing member of magnetic bindings are holding the chains together.

The result is creation of a simulated DNA helix.

Chain reaction: To facilitate a chain reaction it will be necessary to let the water temperature cycle between for example 20°C and 28°C, i.e. below and above the T_{c} for Binding I. New chains will then be created as described above and when Binding I is broken by increasing the temperature the number of template chains are doubled. This results in an exponential increase of the number of chains in the container.

Recirculation or death: A chain will dissolve if the water temperature is increased above the T_{c} for Binding II. Balanced or specific death of certain chains can be obtained by regulating temperature and turbulence in such a way that short pulses of water with a specific temperature hit a group of chains.

Mutations: Point mutations will appear spontaneously by incorporation of different mutagenic elements in the chains. These mutagenes can be of the type suggested in Fig. 10, wherein Binding I is affected or a type wherein Binding II is affected (not shown).

Mechanical stress, deficient Binding II or high temperature will produce shorter chains, while longer chains can be produces when one chain binds two other chains (double hybridization) (Fig. 2) or because Binding II occurs spontaneously. A chain of 10 elements can be varied 4¹⁰ = 10⁶ different ways while a length of 20 elements gives 10¹² possible combinations. If one new chain of 20 elements is produced every minute, testing of all combination will require 2 x 10⁶ years.

### Natural selection

Mutants, which for any reason are more reproducible, will increase in number at the expense of others. Such advantageous characteristics can be;
- Secondary structures stabilizing the chain such that it is resistant to breaking when the temperature is increased,
- secondary structures inhibiting the replication of other chains (simulating natural ribozymes),
- secondary structures «taking advantage» of other elements in the solution,
- sequences adapted to the distribution of elements, and
- chains cooperating with other chains.

The direction of the evolutionary process will be modified by the environment in the container (temperature and turbulence profile, concentration of elements, presence of other chains and elements). The selection process will drive the system towards better replication rates and increasing complexity.

### Applications

The system according to the present invention involves a general tool for demonstrating/simulating chemical interactions, catalytic functions and the behavior of complex systems. It can be particularly designed to demonstrate self-replication and evolution by means of natural selection and offers as such several areas of application.

Education: The system is, as demonstrated above, able to simulate the fundamental characteristics of life in a manner that is easily understandable by children and adults. The system mediates biologically and evolutionary knowledge and can be used as educational tools for general and molecular biology. It can furthermore be combined with a computer based multimedia educational system, suitable for different age groups and competence levels. The programmable unit according to the invention (Fig. 11) can be used with suitable software and hardware to develop programmable temperature and turbulence profiles favoring different type of chains and thereby guide the evolutionary process in different directions, protocol the development of old and new chains and map the characteristics of different chains, for example possible secondary structures.

Games: An evolutionary system comprise a form of «life» and the challenge will be to «breed» new and steadily more robust and complex «species» of this form of life, by playing with the environment (temperature, turbulence, additional elements) to increase the probability for the creation and well being of certain chains. The challenge is then stepped up to a higher level by placing the above-created chain in a container with another sequence. The two sequences are then parts of each others environment, which may lead the evolutionary process in new directions. Some sequences may be destroyed in the competition while other may cooperate on the replication process.

By using electronic communication applications, e.g. the Internet, various sequences and their characteristics may be exchanged and the evolutionary process has expanded beyond its own container.

The challenge of this game will be to produce sequences, which compete with other under varying conditions. The sequences may be named and made known via Internet.

Scientific tool: This invention represents an artificial replication system comprising the ability to evolution by means of natural selection, and will as such represent an independent scientific achievement. Furthermore, the invention constitute a new and unique tool for simulating and investigating the behavior of complex systems, particularly related to the characteristics of self-replication and natural selection. Additionally, the specific hybridization between polymers may be applied as means for calculation, an application that has been extensively demonstrated for nucleic acids (DNA computing).

Sculpture, decoration and exhibitions: The system according to the present inventions has dynamic characteristics, which may be visually appealing. Thus it is possible to use the system to create new and visually appealing physical structures, not only in the form of helical structures resembling the DNA molecule. Furthermore a reproducible system for swimming pools, can be designed for decoration purposes and/or as toys.

## Claims

1. System of elements (A, B, C, G, T) floating in a liquid which can reversibly connect to each other by magnetic forces,
**characterized in that** the inter-elemental bindings (I, II) involve magnetic materials (10, 11, 12, 13, 14, 15, 16, 17, 18) with Curie points within a temperature range corresponding to temperature changes in the liquid surrounding the elements.

2. System according to claim 1,
**characterized in that** the elements are physically designed to provide certain characteristics to the inter-elemental bindings.

3. System according to claim 1 or claim 2,
**characterized in that** specific inter-elemental bindings involve magnetic materials with different Curie points such that specific bindings are receptive to specific changes in temperature.

4. System according to any one of claims 1 - 3,
**characterized in that** single elements or complexes of elements bind to other elements in a manner which promotes or catalyzes new bindings which never or rarely occurs spontaneously.

5. System according to any one of claims 1 - 3,
**characterized in that** single elements or complexes of elements bind to other elements in a manner which promotes or catalyzes breaking of bindings which never or rarely breaks spontaneously.

6. System according to any one of claims 1 - 5,
**characterized in that** the elements are floating in a liquid with a density close to the density of the elements.

7. System according to any one of claims 1 - 6,
**characterized in**that the system includes devices for controlling the temperature and the turbulence surrounding the elements.

8. System according to any one of claims 1 - 7
**characterized in that** the elements are floating in a transparent container.

9. System according to any one of claims 8 - 9,
**characterized in that** the controlling device involves a programmable unit, e.g. a computer, which may be connected to an electronic communication network, e.g. the Internet.

10. Use of the system according to any one of claims 1 - 9 as a device for demonstrating/simulating chemical interactions, catalytic functions, molecular evolution, and the behavior of complex systems, for education, entertainment, decoration, computational, and scientific purposes.

## Patentansprüche

1. System in einer Flüssigkeit schwimmender Elemente (A, B, C, G, T), die sich reversibel miteinander durch magnetische Kräfte verbinden können,
**dadurch gekennzeichnet, daß** die inter-elementaren Bindungen (I, II) magnetische Materialien (10, 11, 12, 13, 14, 15, 16, 17, 18) mit Curie-Punkten innerhalb eines Temperaturbereiches umfassen, der den Temperaturveränderungen in der die Elemente umgebenden Flüssigkeit entspricht.

2. System nach Anspruch 1, **dadurch gekennzeichnet, daß** die Elemente physisch ausgebildet sind, um den inter-elementaren Bindungen bestimmte Eigenschaften zu verleihen.

3. System nach Anspruch 1 oder 2, **dadurch gekennzeichnet, daß** spezifische inter-elementare Bindungen magnetische Materialien mit unterschiedlichen Curie-Punkten umfassen, so daß spezifische Bindungen für spezifische Temperaturänderungen empfänglich sind.

4. System nach einem der Ansprüche 1 bis 3, **dadurch gekennzeichnet, daß** sich einzelne Elemente oder Elementkomplexe auf eine Weise mit anderen Elementen verbinden, die neue Bindungen fördert oder katalysiert, die spontan nie oder selten auftritt.

5. System nach einem der Ansprüche 1 bis 3, **dadurch gekennzeichnet, daß** sich einzelne Elemente oder Elementkomplexe auf eine Weise mit anderen Elementen verbinden, die das Aufbrechen von Bindungen fördert oder katalysiert, die spontan nie oder selten aufbricht.

6. System nach einem der Ansprüche 1 bis 5, **dadurch gekennzeichnet, daß** die Elemente in einer Flüssigkeit mit einer Dichte, die nahe bei der Dichte der Elemente liegt, schwimmen.

7. System nach einem der Ansprüche 1 bis 6, **dadurch gekennzeichnet, daß** das System Mittel zum Steuern der die Elemente umgebenden Temperatur und Strömung umfaßt.

8. System nach einem der Ansprüche 1 bis 7, **dadurch gekennzeichnet, daß** die Elemente in einem transparenten Behälter schwimmen.

9. System nach einem der Ansprüche 8 bis 9, **dadurch gekennzeichnet, daß** die Steuereinrichtung eine programmierbare Einheit, z.B. einen Computer umfaßt, der mit einem elektronischen Kommunikationsnetzwerk, z.B. dem Internet, verbunden werden kann.

10. Verwendung des Systems nach einem der Ansprüche 1 bis 9 als Mittel zur Demonstration/Simulation von chemischen Wechselwirkungen, katalytischen Funktionen, molekularer Evolution und dem Verhalten komplexer Systeme zu Ausbildungs-, Unterhaltungs-, Dekorations-, Rechen- und wissenschaftlichen Zwecken.

## Revendications

1. Système d'éléments (A, B, C, G, T) flottant dans un liquide qui peuvent se lier entre eux de façon réversible grâce à des forces magnétiques, **caractérisé en ce que** les liaisons entre éléments (I, II) incluent des matériaux magnétiques (10, 11, 12, 13, 14, 15, 16, 17, 18) avec des points de Curie compris dans une fourchette de température correspondant aux changements de température dans le liquide entourant les éléments.

2. Système selon la revendication 1, **caractérisé en ce que** les éléments sont physiquement conçus pour fournir certaines caractéristiques aux liaisons entre éléments.

3. Système selon la revendication 1 ou 2, **caractérisé en ce que** des liaisons spécifiques entre éléments incluent des matériaux magnétiques avec des points de Curie différents tels que les liaisons spécifiques sont sensibles à des changements spécifiques de température.

4. Système selon l'une des revendications 1 à 3, **caractérisé en ce que** des éléments pris isolément ou des complexes d'éléments se lient à d'autres éléments d'une façon qui initialise ou catalyse de nouvelles liaisons qui ne se produisent jamais ou rarement de façon spontanée.

5. Système selon l'une des revendications 1 à 3, **caractérisé en ce que** des éléments pris isolément ou des complexes d'éléments se lient à d'autres éléments d'une façon qui initialise ou catalyse la rupture de liaison qui ne se produit jamais ou rarement de façon spontanée.

6. Système selon l'une des revendications 1 à 5, **caractérisé en ce que** les éléments flottent dans un liquide ayant une densité proche de la densité des éléments.

7. Système selon l'une des revendications 1 à 6, **caractérisé en ce que** le système comprend des dispositifs pour contrôler la température et la turbulence autour des éléments.

8. Système selon l'une des revendications 1 à 7, **caractérisé en ce que** les éléments flottent dans un récipient transparent.

9. Système selon l'une des revendications 1 à 8, **caractérisé en ce que** les dispositifs de contrôle comprennent une unité programmable, par exemple un ordinateur, qui peut être connectée à un réseau de communication électronique, par exemple Internet.

10. Utilisation du système selon l'une des revendications 1 à 9, comme dispositif pour démontrer/stimuler des interactions chimiques, des fonctions catalytiques, une évolution moléculaire et le comportement de systèmes complexes, pour l'éducation, le divertissement, la décoration, le calcul et autres buts scientifiques.
